# EUROPEAN PATENT APPLICATION

(11) **EP 2 608 557 A2**
(43) Date of publication of application: **26.06.2013**
(21) Application number: 12179456.4
(22) Date of filing: 07.08.2012
(51) Int. Cl.: H04N 21/236, H04N 21/218, H04N 7/18

(54) **Communication method, control end apparatus and detection system using the same**

(30) Priority: 22.12.2011 TW 100147964
(71) Applicant: ITE Tech. Inc, Hsinchu (TW)
(72) Inventor: Wang, Chien-Fa, 112 Taipei City (TW)
(74) Representative: Becker Kurig Straus

(57) **Abstract**

The invention provides a communication method, which is applicable for a detection system, and a control end apparatus as well as a detection apparatus using the same method. According to one aspect of the invention, the invention proposes a communication method, which is applicable for communications between a detection system and a control end apparatus, and includes following procedures: the detection system transmits a first digital television signal to a control end apparatus, the first digital television signal including one or more video signals; and the control end apparatus transmits a second digital television signal to the detection system, where the second digital television signal includes one or more control commands.

## Description

### BACKGROUND

### Field of the Invention

The invention is related to a communication method, and, in particular, the invention is related to a communication method, which is applicable for a detection system, and a control end apparatus as well as a detection apparatus using the same method.

### Description of Related Art

As technology advances rapidly, detection systems become increasingly important for people's life. For example, cameras installed at major road intersections, home care system designed for children and the elderly and the security detection system basically are used for building monitoring, and have played an important role in people's life. In general, the mainstream detection systems have mainly two architectures, one architecture uses traditional analog cameras at its monitoring end, and uses cable to transmit analog TV signal to its control end by point-to-point approach, but in such architecture, the control end can not directly control cameras at the monitoring end, and if in a larger monitoring area, the cabling cost is higher. The other architecture uses digital cameras at the monitoring end, and the digital cameras at the monitoring end are connected with the control end via Ethernet, thereby enabling audio and video data and video data transmission by converting the audio and video signals into audio and video streaming data packets. This architecture focuses on supporting the two-way communication between the monitoring end and control end, enabling the monitoring end to return the audio and video data to the control end, and the control end can also control the monitoring end.

Although he an Ethernet-based detection system overcomes the problem that the traditional architecture detection system is unable to support the two-way communication between the monitoring end and control end by the cable-based transmission of analog signals, when a substantial increase occurs in data traffic, such as simultaneously controlling of hundreds of cameras in a building or a community, the use of Ethernet as the architecture for the detection system may not be able to avoid its fundamental problem such as network traffic jam, packet delay and packet loss, etc. The detection system with traditional analog transmission architecture does not support two-way communication between monitoring end and control end, and its cabling cost may be very high; while the detection system with the Ethernet-based digital transmission architecture supports two-way communication between monitoring end and control end, Ethernet is unable to operate efficiently in a large-scale detection system due to inherent fundamental problem in the Ethernet such as network traffic jam, packet delay, packet loss, and so like.

### SUMMARY

According to one aspect of the invention, the present invention proposes a communication method, which is applicable for the communication between a detection system and a control end apparatus, and includes following steps: the detection system transmitting a first digital television signal to the control end apparatus, and the first digital television signal includes one or more video signals; and the control end apparatus transmitting a second digital television signal to the detection apparatus, and the second digital television signal includes one or more control commands.

According to another aspect of the invention, the present invention proposes a control end apparatus, which includes: a receiver module, a main control unit, a multiplexer, and a transmitter module. The receiver module is configured for receiving a first digital television signal transmitted from a first detection apparatus. The main control unit is configured for transmitting a control command to a first detection apparatus. The multiplexer is connected with the main control unit, and assigns a first identifier to the control commands to be transmitted to the first detection apparatus, and generates a transport stream packet. In addition, the transmitter module is connected with the multiplexer, and is configured to modulate the transport stream packet into a second digital television signal, and then transmit the second digital television signal over a broadcast frequency.

According to yet another aspect of the invention, the present invention proposes a detection system, which includes a first detection apparatus The first detection apparatus is configured for receiving a first digital television signal from a control end apparatus, where the first digital television signal includes a control command, and the first detection apparatus includes: a receiver module, a demultiplexer, a control unit, a video capture unit, an encoding unit, a multiplexer, and a transmitter module. The receiver module is configured for receiving the first digital television signal to generate a second transport stream packet. The demultiplexer is connected with the receiver module and obtains the control command from the first transport stream packet. The control unit is connected with the demultiplexer and controls the first detection apparatus to execute the control command. The video capture unit is configured for capturing a video signal. The encoding unit is connected with the video capture unit and encodes the video into an encoded video signal. The multiplexer is connected with the encoding unit and multiplexes the encoded video signal into a second transport stream packet. In addition, the transmitter module is connected with the multiplexer, and is configured to modulate the second transport stream packet into a second digital television signal and transmit the second digital television signal via a transmission frequency.

According to yet another aspect of the invention, the present invention proposes communication method, applicable for a control end apparatus to transmit a digital television signal to control a first detection apparatus, where the digital television signal is a transport stream packet with a packet identifier. The communication method includes the following: setting a broadcast frequency and a first identifier for the first detection apparatus; generating a control command which is configured for controlling the first detection apparatus; multiplexing the control command and assigning the packet identifier with the first identifier to the control command to generate the transport stream packet; modulating the transport stream packet to generate digital television signal; and transmitting the digital television signal over the broadcast frequency.

According to yet another aspect of the invention, the present invention proposes a communication method, applicable for a detection apparatus which receives a digital television signal from a control end apparatus, where the digital television signal is a transport stream packet. The communication method includes the following: setting a first identifier of the detection apparatus; filtering the transport stream packet by the first identifier to generate a filtered transport stream packet; demultiplexing the filtered transport stream packet to obtain a control command; and executing the control command.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic diagram of the control end apparatus and multiple detection apparatuses for a detection system according to an exemplary embodiment of the invention.

FIG. 2A is a functional block diagram of a control end apparatus and detection apparatus according to an exemplary embodiment of the invention.

FIG. 2B is a functional block diagram of a detection apparatus according to an exemplary embodiment of the invention.

FIG. 3 is a functional block diagram of a control end apparatus according to an exemplary embodiment of the invention.

FIG. 4 is a functional block diagram of a detection apparatus according to an exemplary embodiment of the invention.

FIG. 5A is a communication flowchart of digital television signals receiving system in the control end apparatus according to an exemplary embodiment of the invention.

FIG. 5B a communication flowchart transmitting digital television signals in the control end apparatus according to an exemplary embodiment of the invention.

FIG. 6 is a flowchart of a communication method according to an exemplary embodiment of the invention.

FIG. 7 is a flowchart of a communication method according to an exemplary embodiment of the invention.

FIG. 8 is a flowchart of a communication method according to an exemplary embodiment of the invention.

### DETAILED DESCRIPTION OF DISCLOSED EMBODIMENTS

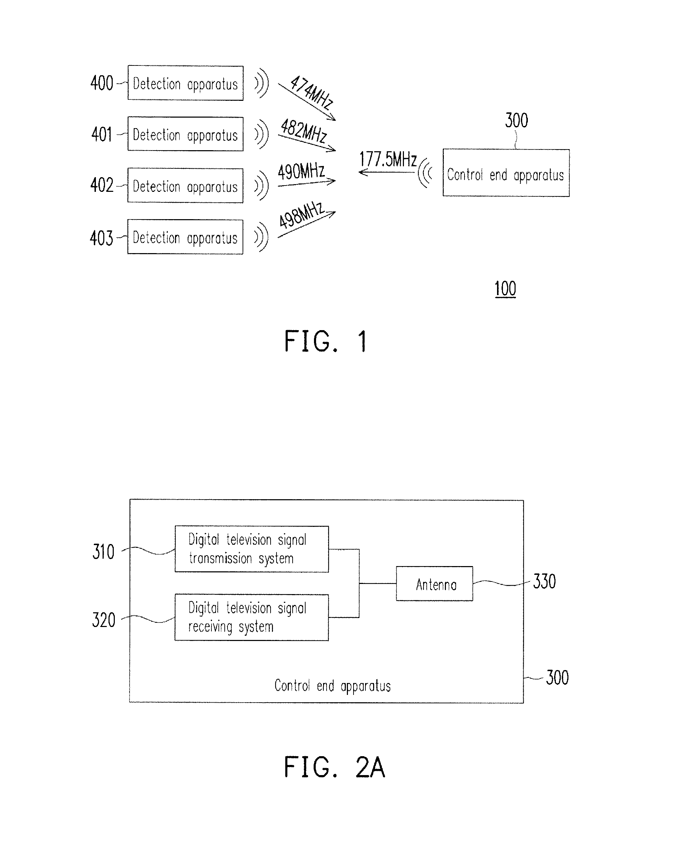

FIG. 1 is a schematic diagram of the control end apparatus and multiple detection apparatuses for a detection system according to an exemplary embodiment of the invention. As shown in FIG. 1, the detection system 100 includes a control end apparatus 300 and a plurality of detection apparatuses 400∼403. The corresponding functions and communication methods with respect to the detection system 100, the control end apparatus 300 and the detection apparatuses 400∼403 will be described below.

In the detection system 100, the control end apparatus 300 is a main controller device, which is configured to send control commands to the detection apparatuses 400∼403, which in turn receive the audio content and video content captured by the detection apparatuses. For example, the control end apparatus 300 may transmit control commands over a broadcast frequency of 177.5Hz. The detection apparatuses 400∼403 are configured to monitor their preconfigured target areas (or target zones) respectively. The detection apparatuses 400∼403 may transmit audio and video content captured by them respectively to the control end apparatus 300 over multiple transmission frequencies such as 474 MHz, 482 MHz, 490 MHz, 498 MHz.

In the present exemplary embodiment, the control end apparatus 300 may transmit control signals respectively to the detection apparatuses 400∼403 over preconfigured broadcast frequencies; while the detection apparatuses 400∼403 may transmit the captured audio-video content message back respectively to the control end apparatus 300 over the preconfigured transmission frequencies. In this exemplary embodiment, the broadcast frequency can be a communication frequency of 177.5 MHz, and the detection apparatuses 400∼403 use the 474 MHz, 482 MHz, 490 MHz and 498 MHz as their transmission frequencies respectively, but the invention is not thereto. The control end apparatus 300 can also control more than four detection apparatuses. The detection apparatuses 400∼403 can be, for example, camera, photo camera and other video capture devices, but the invention is not thereto.

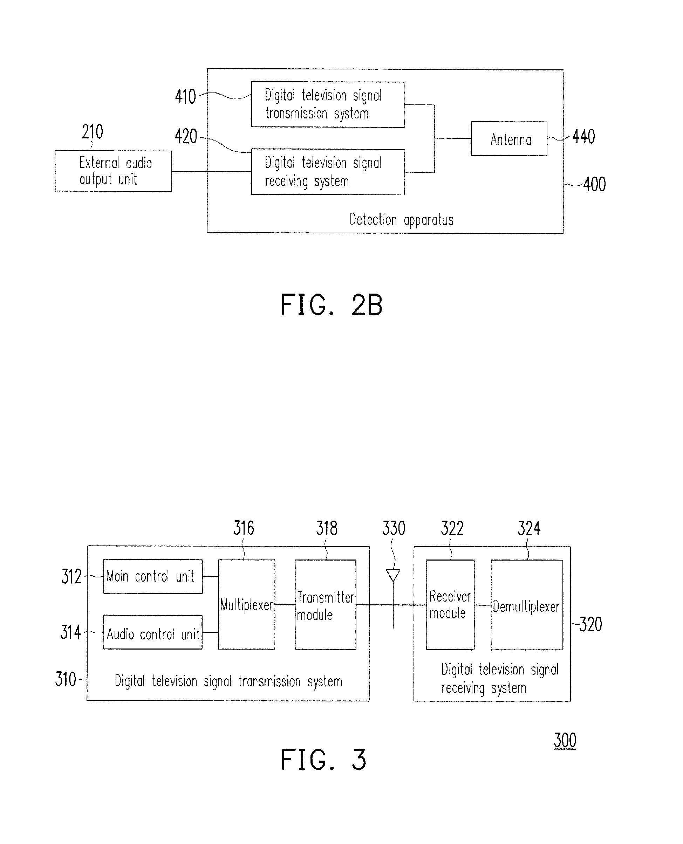

FIG. 2A is a schematic functional block diagram of a communication method with its control end apparatus and detection apparatuses drawn according to another exemplary embodiment of the invention. FIG. 2B is a functional block diagram of a detection apparatus according to another exemplary embodiment of the invention. Referring to FIG. 1, FIG. 2A and FIG. 2B, a control end apparatus 300 includes a digital television signal transmission system 310, a digital television signal receiving system 320 and antenna 330. It is assumed here that the transmission frequency used by the first detection apparatus 400 is 474MHz, the second 401 is 482MHz, the third 402 is 490MHz, the fourth 403 is 498MHz, then the digital television signal receiving system 320 with four receiving units receives respectively the digital television signals transmitted by the detection apparatuses 400∼403 over four different transmission frequencies, and then obtains multiple audio-video content from these digital television signals. The digital television signals transmission system 310 uses a broadcast frequency to transmit digital television signals with control messages to the detection apparatuses 400∼403. The antenna 330 is connected to the digital television signal transmission system 310 and digital television signal receiving system 320, and is configured for transmitting and receiving broadcast frequency signals.

FIG. 2B is a functional block diagram of the first detection apparatus 400. Referring to FIG. 1, FIG. 2A and FIG. 2B again, the first detection apparatus 400 may include a digital television signal transmission system 410, a digital television signal receiving system 420 and an antenna 440. The digital television signal transmission system 410 transmits the digital television signals which include the encoded audio and video contents or response messages to the control end apparatus 300 using a preconfigured transmission frequency such as 474MHz. The digital television signal receiving system 420 is configured to receive the digital television signals transmitted by the control end apparatus 300 from a preconfigured broadcast frequency, for example, 177.5MHz, and filter the digital television signals by the value of transmission frequency 474MHz pre-assigned to the first detection apparatus 400.

To be illustrated more clearly, the digital television signal transmitted by the control end apparatus 300 is actually a transport stream consisting of data packets, hereinafter referred to as TS, and the packet header includes a Packet ID, hereinafter referred to as PID, with its length being 13 bits, ranging from 0000 to 8191, but the PID 8191 is reserved as null packet, so the PID available ranges only from 0000 to 8190. In practical implementation, given that the transmission frequency for the first detection apparatus 400 is 474MHz, the figure 474 can simply be regarded as a first identifier, the commands intended to be transmitted to the first detection apparatus 400 can be inserted into the packet whose PID matching the first identifier, i.e., 0474, 1474, 2474, 3474, 4474, 5474, 6474, 7474. Thus, the digital television signal receiving system 420 can filter out the transport stream packets not for the first detection apparatus 400 by their PID filter, but only receives those packets intended for the first detection apparatus 400. The invention is not limited to the aforementioned approach, and in other exemplary embodiments, the control end apparatus 300 can also divide a broadcast channel into multiple sub-channels, for example, four sub-channels, and respectively assign the sub-channels to the corresponding detection apparatuses 400∼403.

Further, in other exemplary embodiments, the control end apparatus 300 can also take the field position of the transport parameter set in Orthogonal Frequency Division Multiplexing (OFDM) message frame of the digital television signals as an identifier, for example, taking a cell ID as the first identifier to identify the TS packets transmitted to the different detection apparatuses.

The antenna 440 is connected to the digital television signal transmission system 410 and the digital television signal receiving system 420, and is configured to transmit and receive broadcast frequency signals. An external audio output unit 210 is connected to the digital television signal receiving system 420, and is configured to output audio content.

FIG. 3 is a functional block diagram of a control end apparatus according to one of the exemplary embodiments of the invention. Referring to FIG. 1, FIG. 2A, FIG. 2B and FIG. 3, the digital television signal transmission system 310 in the control end apparatus 300 includes a main control unit 312, an audio control unit 314, a multiplexer 316 and a transmitter module 318. The main control unit 312 is configured to transmit the control commands, such as zoom in/zoom out, pan/tilt, photographing, and so forth. Also, the main control unit 312 is configured to transmit the control commands to the multiplexer 316. The audio control unit 314 is configured to receive audio signals, and encode the audio signals to generate the encoded audio signals, where the encoded audio signal format can be in MPEG2 format, but possible implementation of the invention is not limited thereto.

The multiplexer 316 is connected to the main control unit 312 and the audio control unit 314. The multiplexer 316 selects the corresponding identifier by the value of transmission frequency corresponding to the detection apparatus 400∼403, and assigns the corresponding PIDs to the control commands and the encoded audio signals according to the identifier, and then generates TS packets. Thus, the first detection apparatus 400 can quickly identifies the packets required to be received in huge traffic by their PIDs, but filters out other packets not for itself.

The transmitter module 318 is connected to multiplexer 316, and is configured to modulate the TS packets into digital television signals and transmit the digital television signals over a preconfigured broadcast frequency. In the present exemplary embodiment, the digital television signal specification can be an European-compliant wireless digital television broadcasting standard (DVB-T), a cable digital television broadcasting standard (DVB-C), U.S. Advanced Television Standards Committee standard (ATSC), Japanese Integrated Services Digital Broadcasting standard (ISDB-T), Chinese Digital Multimedia Broadcasting standard (DMB-TH), Chinese Digital Terrestrial Multimedia Broadcast standard (DTMB) and so forth, but the invention is not limited thereto.

Further, the main control unit 312 can also generate common control message and select a broadcast ID. For example, as a broadcast ID, the PID can be 0, 1, 2, 3, 4, 5, 6, 7, 8 or 9, while the multiplexer 316 can also multiplex this common control message together with the PID into a TS packet, and modulate the TS packet via the transmitter module 318 to generate digital television signals, and then transmit the digital television signals to all the detection apparatuses 400∼403 over the preconfigured broadcast frequencies.

The digital television signal receiving system 320 in the control end apparatus 300 may include a receiver module 322 and a demultiplexer 324, where the receiver module 322 is configured to receive the multiple digital television signals from the corresponding transmission frequencies of the detection apparatuses 400∼403. The demultiplexer 324 is connected to the receiver module 322, and is configured to demultiplex the TS packets transmitted from the receiver module 322 into the audio-video streams in the format of, for example, an advanced video coding audio-video stream such asH.264 AV Stream and the static images in the format of joint Photographic Experts Group(JPEG) picture.

It is noted that although, in the control system 100 from FIG. 1 to FIG. 3, the communication among the control end apparatus 300 and detection apparatuses 400∼403 is performed over wireless transmission, the communication can also be performed over wired communication links among them.

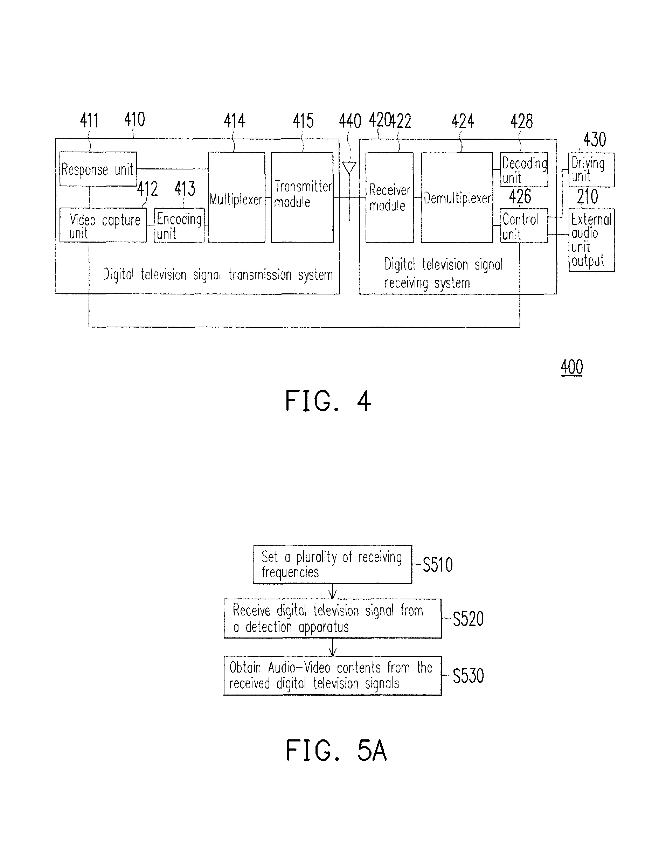

FIG. 4 is a functional block diagram of the first detection apparatus 400 according to another exemplary embodiment for the invention. Referring to FIG. 1, FIG. 2A, FIG. 2B and FIG. 4, the first detection apparatus 400 is divided into two parts, where a first part of the digital television signal receiving system 420 may include a receiver module 422 configured to demodulate the digital television signals received by the first detection apparatus 400 from the control end apparatus 300 to generate the TS packets. Further, the receiver module 422 can also set up a filter (not shown in FIG. 4) in the present embodiment. The filter can be, for example, a PID filtering software or a PID filter circuit configured to filter the packets without the first identifier or a broadcast identifier in the TS packets, for example, to filter out the packets without the specific PID in the TS packets and only receive packets with the specific PID in the TS packets, but the invention is not limited thereto.

In the present exemplary embodiment, the digital television signal receiving system 420 in the detection apparatus 400 also includes a demultiplexer 424, a control unit 426 and a decoding unit 428. The demultiplexer 424 is connected to the receiver module 422 and is configured to demultiplex the TS packets to generate the encoded audio signals and/or control commands. In addition, the aforementioned filter setting up in the receiver module 422 may also be setting up in the demultiplexer 424 in other embodiments.

The control unit 426 is connected with the demultiplexer 424, and is configured to receive control commands, such as zoom in/zoom out, pan/tilt, photographing, and so forth. A driving unit 430 is connected with the control unit 426, and is configured to execute the corresponding actions following the control command. The decoding unit 428 is connected to the decontrol unit 426, and is configured to receive and decode the encoded audio signals, and restore the audio signals transmitted from the control end apparatus 300. The external audio output unit 210 is connected with the decoding unit 428, and is configured to play/broadcast the audio signals.

Control commands can also be configured to control parameter settings as follows: after the driving unit 430 receives the control command and obtains the parameter value, the video capture unit 412 is set up according to the set value of this parameter, such as setting up the image resolution of the video capture unit 412, image compression parameters, but the invention is not limited to thereto. In addition, the external audio output unit 210 can also be audio output equipment such as an amplifier or a speaker and so like, but the invention is not limited thereto.

In the first detection unit 400, the second part of the digital television signal transmission system 410 includes a response unit 411 connected to multiplexer 414, and the response unit 411 is configured to generate the corresponding positive response message (ACK) or negative response message (NACK) in response to the control commands received by driving unit 430 and/or the action executed by driving unit 430. For example, when the driving unit 430 receives a command of panning, the response unit 411 transfers a positive response message (ACK) to the multiplexer 414, and then returns the digital video signals with the positive response message (ACK) to the control end apparatus 300 via the transmitter module 415. Alternatively, when the driving unit 430 receives a command of panning 20 degrees and has panned the camera for 20 degrees, the response unit 411 transfers a positive response message (ACK) to the multiplexer 414, and then returns the digital video signals with the positive response message (ACK) to the control end apparatus 300 via the transmitter module 415. In another example, when the driving unit 430 receives a command of panning 20 degrees but fails to pan the camera for 20 degrees, the response unit 411 transfers a negative response message (NACK) to the multiplexer 414, and then returns the digital video signals with the negative response message (NACK) to the control end apparatus 300 via the transmitter module 415.

The digital television signal transmission system 410 may include a video capture unit 412, which is configured to capture static images or audio-video content. An encoding unit 413 is connected with video capture unit 412, and is configured to encode the static images or audio-video contents captured by the video capture unit 412 into encoded images or audio-video signals, where the encoded image signals can be in the format of JPEG picture, and the encoded audio-video signals in the format of H.264 video coding audio-video stream, but the invention is not be limited thereto.

A multiplexer 414 is connected to the encoding unit 413 and the response unit 411, and is configured to multiplex the encoded image signals, and the encoded audio-video signals transmitted from the encoding unit 413, and the positive or negative response messages transmitted from the response unit 411 to generate TS packets. A transmitter module 415 is connected to multiplexer 414, and is configured to modulate the TS packets generated from multiplexer 414 into digital television signals. In addition, the transmitter module 415 transmits the digital television signals to the control end apparatus 300 over the preconfigured transmission frequency.

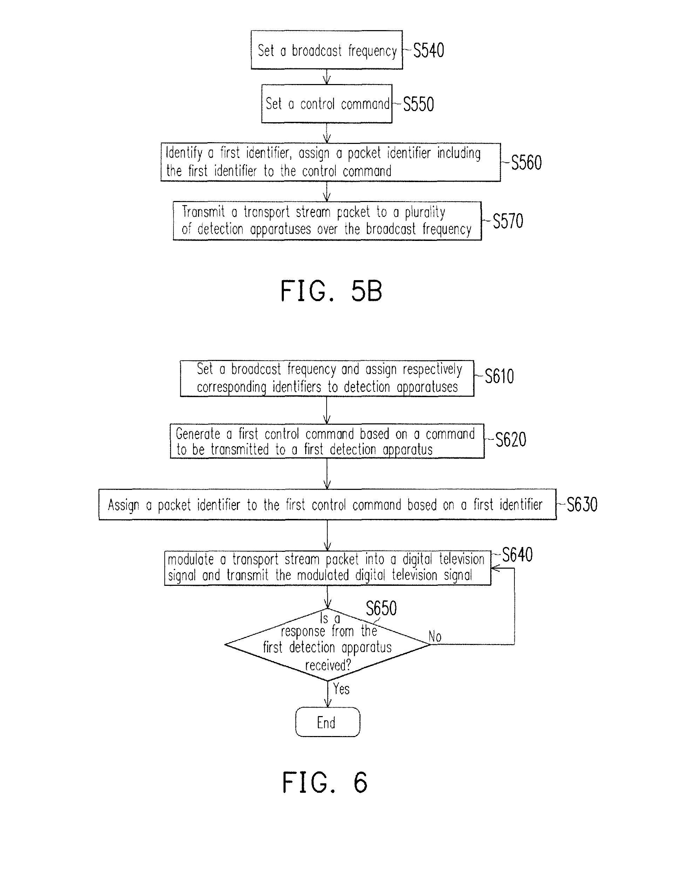

Next, the operation process of control end apparatus 300 is further illustrated below in details in accordance with FIG. 5A and FIG. 5B. FIG. 5A is a communication flowchart of digital television signals receiving system 320 in the control end apparatus 300 drawn according to an exemplary embodiment of the invention. In step S510, the control end apparatus 300 sets multiple transmission frequencies of multiple detection apparatuses 400∼403, the control end apparatus 300 is intended to communicate with, as the reception frequencies for the control end apparatus 300. For example, the control end apparatus 300 may set the reception frequency of control end apparatus 300 as 474 MHz, 482 MHz, 490 MHz and 498 MHz in order to receive multiple digital television signals transmitted from the detection apparatuses 400∼403 over different transmission frequencies. Referring to FIG. 1, FIG. 3 and FIG. 5A, in step S520, the receiver module 322 receives the digital television signals transmitted from the detection apparatuses 400∼403. In step S530, after demodulating and demultiplexing by the receiver module 322 and the demultiplexer 324, the multiple audio-video contents transmitted by the detection apparatuses 400∼403 are obtained from the received multiple digital television signals.

On the other hand, FIG. 5B is a communication flowchart of digital television signals transmission system 310 in the control end apparatus 300 according to an exemplary embodiment of the invention. In step S540, the control end apparatus 300 sets a broadcast frequency for transmitting the digital television signals to the detection apparatus 400. For example, the control end apparatus 300 sets the broadcast frequency as 177.5MHz. Referring to FIG. 1, FIG. 3 and FIG. 5B, in step S550, when the control end apparatus 300 controls the first detection apparatus 400, the main control unit 312 of the control end apparatus 300 generates the control commands, and passes them to the multiplexer 316. In step S560, the multiplexer 316 sets the first identifier corresponding to the first detection apparatus 400, and assigns a PID, which contains the first identifier, to the control commands. For example, the multiplexer 316 uses the transmission frequency F of the first detection apparatus 400 to generate first identifier corresponding to the first detection unit 400. That is, if the transmission frequency F of the first detection apparatus 400 is 474 MHz, then the multiplexer 316 uses a value of "474" as the first identifier to generate a set of PIDs with their corresponding value containing "474" for the control commands, but the invention is not limited thereto. The first identifier or the PID is provided to the first detection apparatus 400 to identify whether the control commands are what the first detection apparatus 400 is required to receive. In step S570, the TS packets are transmitted to the detection apparatuses 400-403 over the broadcast frequency.

To further illustrate the operation process of the control end apparatus 300, another exemplary embodiment is provided below for an explanation. FIG. 6 is a flowchart of a communication method according to an exemplary embodiment of the invention. The communication method includes following procedures. In step S610, the control end apparatus 300 sets a broadcast frequency and also sets corresponding identifiers for the detection apparatuses 400-403. In step S620, the main control unit 312 generates the first control command according to the control command to be given to the first detection apparatus 400.

Referring to FIG. 1, FIG. 3 and FIG. 6, in step S630, the multiplexer 316 assigns the PID to the first control command according to the corresponding first identifier to the first detection apparatus 400 and then generates a TS packet. In step S640, the transmitter module 318 modulates the TS packets into the digital television signals, and the digital television signals are transmitted.

Then, in step S650, the receiver module 322 waits for a response messages, such as a positive response message (ACK) or a negative response message (NACK), returned by the response unit 411 of the first detection apparatus 400. If within a preconfigured time interval, the receiver module 322 does not receive a positive or negative response message transmitted by the first detection apparatus 400, then the receiver module 322 identifies the packets transmitted by the first detection apparatus 400 as damaged packets or packets transmitted incompletely, and returns to execute the step S640 and the step S650. Conversely, if in the step S640, the receiver module 322 receives a positive response message transmitted by the first detection apparatus 400, then the communication method is ended.

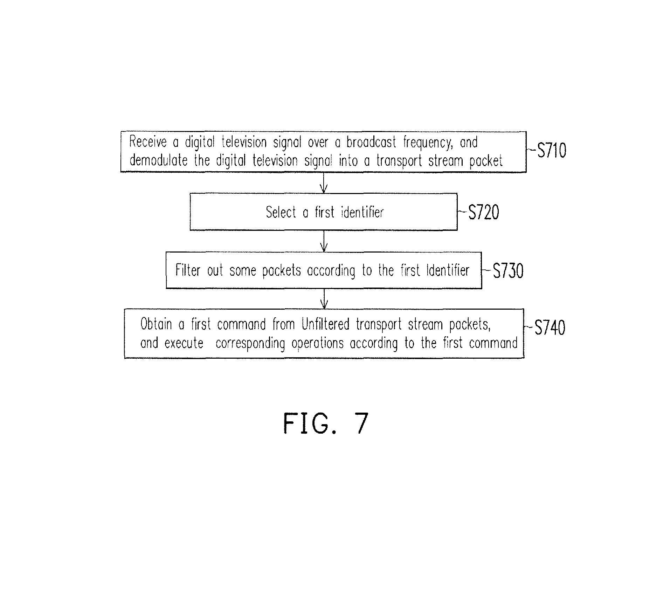

To further illustrate the operation process of the first detection apparatus 400, another exemplary embodiment is described below. FIG. 7 is a flowchart of a communication method according to another exemplary embodiment of the invention. The communication method includes following procedures. In step S710, the receiver module 422 receives digital television signals transmitted from the control end apparatus 300 over a preconfigured broadcast frequency, and then demodulates the digital television signals into TS packets. Referring to FIG. 1, FIG. 4 and FIG. 7, in step S720, the receiver module 422 selects the first identifier corresponding to the first detection apparatus 400.

In step 730, the receiver module 422 or the demultiplexer 424 filters some of the packets according to the first identifier. In step S740, by demultiplexing processing of the demultiplexer 424, the first control command is obtained from the unfiltered packets, and then, the first detection apparatus 400 executes the corresponding operation according to the first control command.

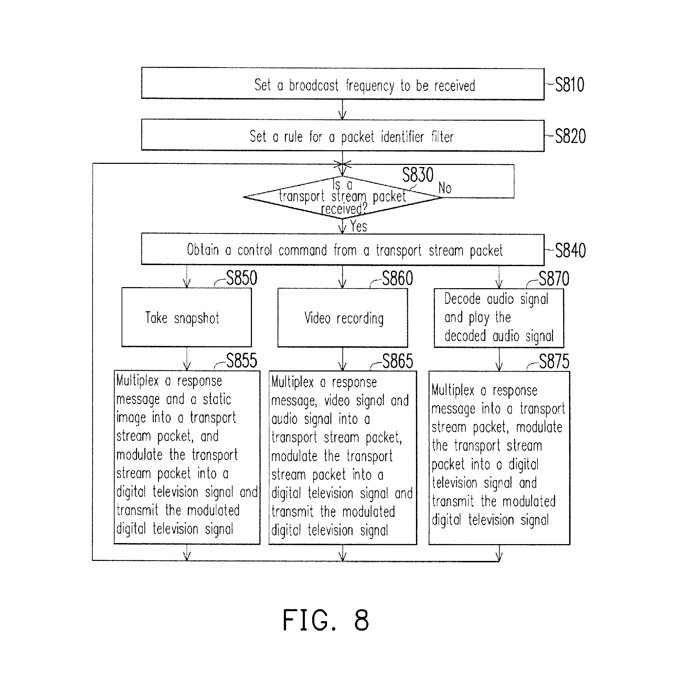

Operational process of the first detection apparatus 400 can be further illustrated in accordance with FIG. 8. FIG. 8 is a flowchart of a communication method according to another exemplary embodiment of the invention. Referring to FIG. 1, FIG. 4 and FIG. 8, in step S810, the detection apparatus 400 sets a broadcast frequency for reception of TS packets. In step S820, the PID filtering rules are set in the receiver module 422, and the rules can be packet identifiers 0,1,2,3,4,5,6,7,8,9 or 0 plus the transmission frequency value F (i.e., ID is 0F), 1 plus the transmission frequency value F (i.e., ID is 1F), 2 plus the transmission frequency value F (i.e., ID is 2F), 3 plus the transmission frequency value F (i.e., ID is 3F), 4 plus the transmission frequency value F (i.e., ID is 7F), 5 plus the transmission frequency value F (i.e., ID is 5F), 6 plus the transmission frequency value F (i.e., ID is 6F) or 7 plus the transmission frequency value F (i.e., ID is 7F) and so forth.

For example, the PID 0F can be set as the packet identifier of the control commands for the specific detection apparatus. PID 1F is the packet identifier of the audio-video contents transmitted for the specific detection apparatuses. PIDs 2F-7F are the packet identifiers for other types of control signals.

For example, when the transmission frequency F of the first detection apparatus 400 is 474 MHz, if the TS packet has a PID 0∼9, i.e. 0474, 1474, 2474, 3474, 4474, 5474,6474 or 7474, all these TS packets can be received through the PID filter of the detection apparatus 400 for further processing.

However, the invention is not limited to the aforementioned approaches, and in other embodiments, PID filter can be set in the demultiplexer 424. That is, the first receiver module 422 receives all incoming TS packets, which are further decoded by software and identified by the processor of demultiplexer 424 to filter out the TS packet not matched to the preconfigured PID.

In step S830, the receiver module 422 identifies whether it has received the TS packets. If yes, step S840 is executed after the step S830. If no, the step S830 is executed again.

In the step S840, the control commands in the packets are obtained via the demultiplexer 424, and the control unit 426 controls the driving unit 430 to execute the corresponding operations according to the control commands, such as step S850, step S860 or step S870. Next, the response unit 411 returns a positive response message (ACK) or negative response message (NACK) to the control end apparatus 300 according to the execution results such as the step S850, the step S860 or the step S870.

When the control unit 426 identifies the control command as a command of taking a snapshot, in the step S850, the driving unit 430 controls the video capture unit 412 to take a snapshot of its preconfigured monitoring area and generate a static image. Further, in step S855, the response unit 411 returns a positive response message (ACK) to the multiplexer 414, and the multiplexer 414 multiplexes the positive response message (ACK) and the static image into a TS packet that is modulated into digital television signals, which are further transmitted by the transmitter module 415 to the control end apparatus 300.

When the control unit 426 identifies the control command as a command of pan/tilt/zoom, in the step S860, the driving unit 430 controls the panning and tilting angles as well as focal length of the camera, then the video capture unit 412 takes the audio and video shots of the preconfigured monitoring area to generate audio and video signals. Next, in step S865, the response unit 411 returns a positive response message (ACK) to the multiplexer 414, and the multiplexer 414 multiplexes the positive response message, audio and video signals into a TS packet that is modulated into digital television signals, which are further transmitted by the transmitter module 415 to the control end apparatus 300.

When the control unit 426 identifies the control command as a command of playing the audio signal, in the step S870, the control unit 426 controls the decoding unit 428 to decode the audio signal, and then controls the external audio output unit 210 to output the decoded audio signal to the monitoring area. After that, in step S875, the response unit 411 returns a positive response message (ACK) to the multiplexer 414, and the multiplexer 414 multiplexes the positive response message (ACK) into a TS packet that is modulated into digital television signals, which are further transmitted by the transmitter module 415 to the control end apparatus 300.

## Claims

1. A communication method, applicable for communication between a detection system (100) and a control end apparatus (300), comprising:
the detection system (100) transmitting a first digital television signal to the control end apparatus (300), and the first digital television signal comprises one or more video signals; and
the control end apparatus (300) transmitting a second digital television signal to the detection system (100), and the second digital television signal comprises one or more control commands.

2. The communication method as claimed in claim 1, wherein the detection system (100) includes a first detection apparatus (400), and the first detection apparatus (400) transmits a first digital television signal over a transmission frequency.

3. The communication method as claimed in claim 2, wherein the control end apparatus (300) sets a first identifier for the control command to be transmitted to the first detection apparatus (400).

4. The communication method as claimed in claim 3, wherein the control end apparatus (300) sets the first identifier by the transmission frequency.

5. The communication method as claimed in claim 4, wherein the first detection apparatus (400) filters out a transport stream packet of the second digital television signal by the first identifier.

6. The communication method as claimed in claim 1, wherein the control end apparatus (300) sets a broadcast identifier for the control command to be transmitted to all the detection apparatuses (400) of the detection system (100).

7. A control end apparatus (300), comprising:
a receiver module (322), configured for receiving a first digital television signal transmitted from a first detection apparatus (400);
a main control unit (312), configured for transmitting a control command to the first detection apparatus (400);
a multiplexer (316), connected with the main control unit (312), configured for assigning a first identifier to the control command to be transmitted to the first detection apparatus (400), and generating a transport stream packets; and
a transmitter module (318), connected with the multiplexer (316), configured for modulating the transport stream packet into a second digital television signal, and transmitting the second digital television signal over a broadcast frequency.

8. The control end apparatus (300) as claimed in claim 7, further comprising:
an audio control unit (314), connected to the multiplexer (316), configured for receiving an audio signal; and
wherein the multiplexer (316) multiplexes the control command and the audio signal into the transport stream packet.

9. The control end apparatuses (300) claimed in claim 7, wherein the transport stream packet has a packet identifier, and the multiplexer (316) assigns the packet identifier comprising the first identifier to the control command to be transmitted to the first detection apparatus (400).

10. A detection system (100), comprising:
a first detection apparatus (400), configured for receiving a first digital television signal from a control end apparatus (300), wherein the first digital television signal comprises a control command, and the first detection apparatus (400) includes:
a receiver module (422), configured for receiving the first digital television signal to generate a first transport stream packet;
a demultiplexer (424), connected with the receiver module (422), configured for obtaining the control command from the first transport stream packet;
a control unit (422), connected with the demultiplexer, controlling the first detection apparatus (400) to execute the control command;
a video capture unit (412), capturing a video signal;
an encoding unit (413), connected with the video capture unit (412), encoding the video into an encoded video signal;
a multiplexer (414), connected with the encoding unit (413), multiplexing the encoded video signal into a transport stream packet; and
a transmitter module (415), connected with the multiplexer (414), modulating the transport stream packet into a second digital television signal, and transmitting the second digital television signal over a transmission frequency.

11. The detection system (100) as claimed in claim 10, wherein the first detection apparatus (100) further comprises:
a response unit, connected to the multiplexer (414), when the first detection apparatus (100) executes the control command, the response unit (411) transmits a positive response message to the multiplexer (414).

12. A communication method, applicable for a control end apparatus (300) to transmit a digital television signal to control a first detection apparatus (400), wherein the digital television signal is a transport stream packet with a packet identifier, and the communication method comprises:
setting a broadcast frequency and a first identifier for the first detection apparatus (400);
generating a control command, configured for controlling the first detection apparatus (400);
multiplexing the control command and assigning the packet identifier with the first identifier to the control command to generate the transport stream packet;
modulating the transport stream packet to generate digital television signal;
and
transmitting the digital television signal over the broadcast frequency.

13. The communication method as claimed in claim 12, further comprising:
waiting for a response message transmitted by the first detection apparatus (400).

14. A communication method, applicable for a detection apparatus (400) which receives a digital television signal from a control end apparatus (300), wherein the digital television signal is a transport stream packet, and the communication method comprises:
setting a first identifier of the detection apparatus (400);
filtering the transport stream packet by the first identifier to generate a filtered transport stream packet;
demultiplexing the filtered transport stream packet to obtain a control command; and
executing the control command.

15. The communication method as claimed in claim 14, further comprising:
transmitting a response message to the control end apparatus (300).
